# EUROPEAN PATENT SPECIFICATION

(11) **EP 0 288 304 B1**
(45) Date of publication and mention of the grant of the patent: **17.03.1993**
(21) Application number: 88303653.5
(22) Date of filing: 22.04.1988
(51) Int. Cl.: G02F 1/133

(54) **Liquid crystal display device**
Flüssigkristall-Anzeigevorrichtung
Dispositif d'affichage à cristal liquide

(30) Priority: 22.04.1987 JP 99319/87
(43) Date of publication of application: 26.10.1988
(73) Proprietor: SHARP KABUSHIKI KAISHA, Osaka 545 (JP)
(72) Inventor: Takamatsu, Toshiaki, Yamatokoriyama-shi Nara-ken (JP)
(74) Representative: Brown, Kenneth Richard

(56) References cited:
- EP-A- 226 218
- EP-A- 0 258 848
- EP-A- 0 273 246
- GB-A- 2 157 452
- PATENT ABSTRACTS OF JAPAN, vol. 8, no. 125 (P-279)[1562], 12th June 1984;& JP-A-59 29 225
- PATENT ABSTRACTS OF JAPAN, vol. 6, no. 179 (P-142)[1057], 14th September 1982;& JP-A-57 93 323
- PATENT ABSTRACTS OF JAPAN, vol. 6, no. 152 (P-134)[1030], 12th August 1982;& JP-A-57 70 522
- PATENT ABSTRACTS OF JAPAN, vol. 8, no. 147 (P-285)[1584], 10th July 1984;& JP-A-59 46 629

## Description

This invention relates to liquid crystal display devices, and more particularly to the liquid crystal cell structure of liquid crystal display devices for obtaining a uniform cell thickness over the entire area of display screen.

Various methods have been hitherto proposed for colour display devices using liquid crystal material. One type of colour liquid crystal display device that is becoming the most popular because it has the advantage of a full colour display while having a relatively simple cell structure, comprises colour filter layers composed of an array of fine red, green and blue patterns formed on the inner side of the substrate on one side of a liquid crystal display cell. Such a device is known from e.g. JP-A-59 46629.

The colour filter layers can be formed using a number of methods including, amongst others, dyeing patterned gelatine, evaporating organic pigments, and electrodeposition to form an organic pigment on an electrode. The gelatine dyeing method is employed particularly often because of the high pattern precision and colour purity of the resulting colour filter.

In the gelatine dyeing method, however, a gelatine film thickness of about 2 to 3 µm is necessary to obtain a sufficient colour concentration. The step difference between the colour filter layer and the seal part between upper and lower substrates of the display cell cannot therefore be ignored, and as a consequence, it is hard to obtain a uniform cell thickness over the entire surface of liquid crystal cell.

If the cell thickness of liquid crystal cell is not uniform, it leads to problems with the display such as unevenness of colour between picture elements in the colour filter layer and irregular response speeds.

It is an aim of this invention to alleviate some of the aforementioned problems.

Other objects and further scope of applicability of the present invention will become apparent from the detailed description given hereinafter. It should be understood, however, that the detailed description of and specific examples, while indicating preferred embodiments of the invention, are given by way of illustration only, since various changes and modifications within the scope of the invention will become apparent to those skilled in the art from this detailed description.

In accordance with a first aspect of this invention there is provided a colour liquid crystal device including a plurality of picture elements comprising: a first substrate having a first electrode and a first orientation film disposed thereon; a second substrate, disposed opposite to said first substrate, having a second electrode, a second orientation film and a colour filter layer having a thickness of about 2 to 3 µm disposed thereon; said first and second electrodes having a thickness of about 0.1 to 0.15 µm; first spacer means, having a first diameter, disposed between the first and second substrates in a region defined by said colour filter layer, and having a spreading density of 1 to 3 spacers per picture element; and second spacer means disposed between said first substrate and said second substrate in a region outside the region defined by the colour filter layer, said second spacer means having a second diameter substantially equal to the sum of said first diameter of said first spacer means and the thickness of said colour filter layer.

In accordance with a second aspect of this invention said second spacer means are disposed in a seal resin and the density of the second spacer means is about 0.1 wt.% of the seal resin.

The present invention will become more fully understood from the detailed description given hereinbelow and the accompanying drawings which are given by way of illustration only, and thus are not limitative of the present invention and wherein:
Fig. 1 is a structural drawing of a liquid crystal display cell showing one of the embodiments of this invention;
Fig. 2 is a structural drawing showing a conventional liquid crystal display cell;

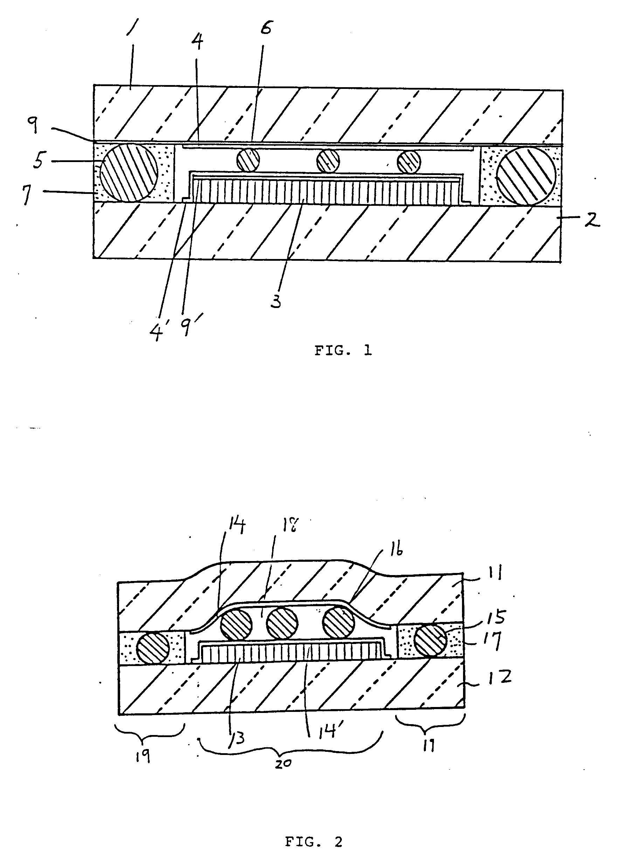

Fig. 1 is a sectional structural drawing of a liquid crystal display cell of a liquid crystal display device showing one of the embodiments of this invention.

An upper substrate 1 and a lower substrate 2 are disposed opposite one another, and a colour filter layer 3 made of gelatine or the like is formed on the inner surface of the lower substrate 2.

On the inner surface of the upper substrate 1, a plurality of transparent electrodes 9 made of ITO or the like, and an orientation film 4 oriented in a specified direction composed of organic high molecular films containing polyimide, polyamide and polyesteramide are formed. A first spacer 6 is spread over the orientation film 4 at a proper density. To spread the first spacer 6, a conventional method is employed, that is, the upper substrate 1 on which the orientation film 4 is formed is dipped in a spacer disperse solution, and it is lifted out so that the spacer is spread uniformly. For example, in the spacer disperse solution, for the liquid crystal display cell of this embodiment, about 50 mg of spacer is dispersed in 1 litre of acetone.

On the lower substrate 2, a colour filter layer 3 sequentially dyed in red, green and blue is formed after forming a pattern of gelatine or the like. A plurality of transparent electrodes 9' and an orientation film 4' oriented in a specific direction are formed on the colour filter layer 3. A seal resin 7 premixed with a second spacer 5 is then disposed in a frame shape around the lower substrate using a screen printing method. As an example, the second spacer 5 can be mixed so that there is about 1 mg in about 1 g of seal resin.

The upper substrate 1 and lower substrate 2 on which respective spacers are spread are glued together to form a liquid crystal cell. The entire liquid crystal cell is pressurized and heated to cure the seal resin 7. A liquid crystal material 8 such as twisted nematic liquid crystal oriented in 90 degrees or 180 to 270 degrees containing a photoactive substance is then injected into the cell.

Thus, the liquid crystal cell of a colour liquid crystal display device is completed.

The materials of the transparent electrodes 9' and orientation film 4' on the colour filter layer 3 of the lower substrate 2 are the same as those of the transparent electrodes 9 and orientation film 4 on the upper substrate 1. The transparent electrodes 9 and 9' are disposed in directions so as to cross over one another.

Glass or a flexible material may be used for example as the material for the upper and lower substrates 1 and 2.

The first spacer 6 and second spacer 5 are formed of transparent glass fibre fine powder, cut powder, or transparent plastics. The spacers should preferably be spherical in shape, but the sizes of respective one of the first spacers 6 or second spacers 5 need not be particularly uniform.

The spreading density of the first spacers 6 is one to three spacers per picture element (about 150 µm x 150 µm). The density of the second spacers 5 is about 0.1 wt.% in the seal resin 7. An epoxy resin, for example, may be used as the seal resin. A thermosetting resin may also be used.

Conventionally, since seals have identical diameters were generally used for the display part and the seal part, when, for example, spacers of the same diameter are spread both in the seal parts around the cell and colour filter layer and in the region where the colour filter layer is formed, the cell thickness is defined by the spacers in both these regions. Therefore, as shown in Fig. 2, the cell thickness is reduced in a region around the colour filter layer 13.

In Fig. 2, numerals 11, 12 are respectively upper and lower substrates, 13 is a colour filter, 14, 14' are orientation films, 15, 16 are spacers, 17 is a seal member, and 18 is a liquid crystal material. In Fig. 2, however, the upper and lower electrodes are omitted. Numeral 19 denotes the seal part around the cell and colour filter layer, and 20 shows the region in which the colour filter layer is formed.

In order to provide a liquid crystal display device with a uniform cell thickness across the display cell, second spacers 5 are formed with diameters substantially greater than those of the first spacers 6 by an amount equivalent to the thickness of the colour filter layer 3. Such a display cell of a colour liquid crystal display device that solves the above problems in accordance with an embodiment of this invention is shown in Fig. 1.

By way of example, the thicknesses (or diameters) of the members of the liquid crystal display device in Fig. 1 are as follows:

| | |
|---|---|
| Substrates 1, 2 | about 1 mm |
| Electrodes 9, 9' | about 0.1 to 0.15 µm (preferably about 0.1 µm) |
| Orientation films 4, 4' | about 0.06 µm |
| Colour filter layer 3 | about 2 to 3 µm (preferably about 3 µm) |
| First spacer 6 | about 4.5 µm |
| Second spacer 5 | about 7.5 µm |

In this embodiment, the thickness of the colour filter layer 3 is about 3 µm, and the first spacers 6 are about 4.5 µm in diameter and the second spacers 5 are about 7.5 µm in diameter.

That is, since the film thickness of the colour filter layer 3 is about 3 µm, the second spacers 5 mixed in the seal part of the lower substrate 2 are about 3 µm greater in diameter than the first spacers 6 used on the colour filter 3 on the upper substrate 1.

Since the film thicknesses of the electrodes 9, 9' and orientation films 4, 4' are very small compared with that of the colour filter layer 3, the film thicknesses of the electrodes 9, 9' and orientation films 4, 4' will not affect the display cell thickness of the display device. Accordingly, the diameter of the second spacers 5 placed in the seal part are substantially greater by the portion of the film thickness of the colour filter 3 than the diameter of the first spacers disposed on the colour filter layer 3. Therefore, in this invention, the diameters of the spacers disposed on the seal part and those disposed on the colour filter layer are different.

If the film thicknesses of the electrodes 9, 9' and orientation films 4, 4' cannot be ignored, the diameter of the second spacers 5 in the seal part should be set to be larger than the diameter of the first spacers 6 by an amount equivalent to the sum of the thicknesses of the electrodes 9, 9'; the orientation films 4, 4' and the colour filter layer 3.

The colour filter layer 3 used in this invention should be arranged tightly over the entire surface of the display area. For example, the three colours, red, green and blue may be arranged in a striped array, diagonal array or delta array across the colour filter.

If the colour filter layer 3 is composed of more than one filter array and there are gaps between adjacent filters, the spacers within these gaps must also be distributed with the proper density. Since these spacers are disposed on the substrate in a region free from the colour filter layer, these spacers may be of the same material as the first spacers 6 described above.

When arranging spacers in the array gaps of the colour layer 3, individual spacers, thinly coated with proper adhesive, are used.

In liquid crystal cells fabricated in this manner, the spacers overlying the colour filter layer 3 are made of the first spacers 6 of smaller diameter, and the spacers in the seal part surrounding the colour filter layer 3 are made of the second spacers 5 of greater diameter. Therefore, in the colour filter layer 3 part, that is, in the display part, the cell thickness is determined by the first spacers 6 of smaller diameter, while in the seal part other than the colour filter layer 3, the cell thickness is determined by the second spacers 5 of greater diameter.

The first spacers 6 may also be dispersed outside the colour filter layer 3, but in this position they do not affect the cell thickness of the substrate. Since the second spacers 5 are formed in the specified position by a screen printing method, they will not be disposed in the region of the colour filter layer 3.

Therefore, the cell thickness is uniform inside and outside the colour filter layer 3, so that a liquid crystal display device having a uniform thickness over the entire region of the display screen may be obtained.

As described in detail herein, by applying this invention, a liquid crystal cell having a uniform cell thickness over the entire surface may be obtained, and the unevenness of colour due to defective cell thickness may be prevented, so that a colour liquid crystal display excellent in display grade may be realised.

In the embodiment shown in Fig. 1, the electrodes on the upper substrate extend to the seal part on two sides of the substrate, while the electrodes on the lower substrate extend to the seal part at the other two sides of the electrode.

While only one embodiment of the present invention has been described, it will be apparent to those skilled in the art that various changes and modifications may be made therein without departing from the scope of the present invention as claimed.

## Claims

1. A colour liquid crystal device including a plurality of picture elements comprising: a first substrate (1) having a first plurality of electrodes (9) and a first orientation film (4) disposed thereon; a second substrate (2), disposed opposite to said first substrate, having a second plurality of electrodes (9'), a second orientation film (4') and a colour filter layer (3) having a thickness of about 2 to 3 µm disposed thereon; characterised in that said first and second electrodes have a thickness of about 0.1 to 0.15 µm; first spacer means (6), having a first diameter, are disposed between the first and second substrates in a region defined by said colour filter layer, and have a spreading density of 1 to 3 spacers per picture element; and second spacer means (5) are disposed between said first substrate and said second substrate in a region outside the region defined by the colour filter layer, said second spacer means having a second diameter substantially equal to the sum of said first diameter of said first spacer means and the thickness of said colour filter layer.

2. A colour liquid crystal display device as claimed in claim 1, wherein said first and second electrodes have a thickness of about 0.1 µm and said colour filter layer has a thickness of about 3 µm.

3. A colour liquid crystal display device as claimed in claim 1 or claim 2, wherein said second spacer means are disposed in a seal resin (7), the density of said second spacer means being about 0.1 wt% of the seal resin.

4. A colour liquid crystal display device as claimed in claim 1, wherein said first and second electrodes have a thickness of about 0.1µm.

## Patentansprüche

1. Farb-Flüssigkristall-Anzeigevorrichtung mit einer Vielzahl von Bildelementen, umfassend: ein erstes Substrat (1), das eine erste Vielzahl von Elektroden (9) und einen darauf angeordneten ersten orientierten Film (4) aufweist, sowie ein zweites Substrat (2), das gegenüber dem ersten Substrat angeordnet ist und eine zweite Vielzahl von Elektroden (9'), einen zweiten orientierten Film (4') und eine Farbfilter-Schicht (3) mit einer Dicke von etwa 2 bis 3 µm darauf angeordnet aufweist,
dadurch gekennzeichnet,
daß die ersten und zweiten Elektroden eine Dicke von 0,1 bis 0,15 µm aufweisen,
daß erste Abstandshalter (6) mit einem ersten Durchmesser zwischen dem ersten und zweiten Substrat in dem durch die Farbfilter-Schicht definierten Bereich angeordnet sind und eine Spreizdichte von 1 bis 3 Abständen pro Bildelement haben, und
daß zweite Abstandshalter (5) zwischen dem ersten und dem zweiten Substrat in dem Bereich außerhalb des von der Farbfilter-Schicht definierten Bereichs vorgesehen sind, die einen zweiten Durchmesser aufweisen, der im wesentlichen der Summe vom ersten Durchmesser der ersten Abstandshalter und der Dicke der Farbfilter-Schicht gleich ist.

2. Farb-Flüssigkristall-Anzeigevorrichtung gemäß Anspruch 1, wobei die ersten und die zweiten Elektroden eine Dicke von etwa 0,1 µm haben und die Dicke der Farbfilter-Schicht etwa 3 µm beträgt.

3. Farb-Flüssigkristall-Anzeigevorrichtung gemäß Anspruch 1 oder 2, wobei die zweiten Abstandshalter in einem Versiegelungs-Harz (7) angeordnet sind und die Massendichte der zweiten Abstandshalter etwa 0,1 Gew.-% vom Versiegelungs-Harz ist.

4. Farb-Flüssigkristall-Anzeigevorrichtung gemäß Anspruch 1, wobei die ersten und die zweiten Elektroden eine Dicke von etwa 0,1 µm haben.

## Revendications

1. Dispositif en couleur à cristaux liquides incluant une pluralité d'éléments d'image comprenant: un premier substrat (1) comportant une première pluralité d'électrodes (9) et un premier film d'orientation (4) disposé sur celle-ci; un second substrat (2), disposé à l'opposé dudit premier substrat, comportant une seconde pluralité d'électrodes (9'), un second film d'orientation (4') et une couche de filtre coloré (3) ayant une épaisseur d'environ 2 à 3 µm disposée sur celui-ci; caractérisé en ce que lesdites premières et secondes électrodes ont une épaisseur d'environ 0,1 à 0,15 µm; des premiers moyens d'espacement (6), ayant un premier diamètre, sont disposés entre les premier et second substrats dans une région définie par ladite couche de filtre coloré, et ont une densité d'étalement comprise entre 1 et 3 moyens d'espacement par élément d'image; et des seconds moyens d'espacement (5) sont disposés entre ledit premier substrat et ledit second substrat dans une région à l'extérieur de la région définie par la couche de filtre coloré, lesdits seconds moyens d'espacement ayant un second diamètre effectivement égal à la somme dudit premier diamètre desdits premiers moyens d'espacement et de l'épaisseur de ladite couche de filtre coloré.

2. Dispositif d'affichage en couleur à cristaux liquides selon la revendication 1, dans lequel lesdites premières et secondes électrodes ont une épaisseur environ égale à 0,1 µm et ladite couche de filtre coloré a une épaisseur environ égale à 3 µm.

3. Dispositif d'affichage en couleur à cristaux liquides selon l'une quelconque des revendications 1 et 2, dans lequel lesdits seconds moyens d'espacement sont disposés dans une résine de scellement (7), la densité desdits seconds moyens d'espacement étant environ égale à 0,1 % en poids de la résine de scellement.

4. Dispositif d'affichage en couleur à cristaux liquides selon la revendication 1, dans lequel lesdites premières et secondes électrodes ont une épaisseur environ égale à 0,1 µm.
